Europäisches Patentamt

European Patent Office

Office européen des brevets

(19)

(11) Publication number: **0 059 530**

**A1**

# EUROPEAN PATENT APPLICATION

(21) Application number: **82300337.1**

(22) Date of filing: **22.01.82**

(51) Int. Cl.³: **G 01 F 23/16**

(30) Priority: **23.01.81 GB 8102137**

(43) Date of publication of application:
**08.09.82 Bulletin 82/36**

(84) Designated Contracting States:
**AT BE CH DE FR GB IT LI LU NL SE**

(71) Applicant: **STABLEX INTERNATIONAL HOLDINGS LIMITED**
**16 Old Queen Street**
**London SW1H 9HT(GB)**

(72) Inventor: **Powell, Robert**
**726 London Road**
**West Thurrock Grays Essex RM 16 1LS(GB)**

(74) Representative: **Daley, Michael John et al,**
**F.J. CLEVELAND & COMPANY 40/43 Chancery Lane**
**London, WC2A 1JQ(GB)**

(54) Liquid level sensor for a tanker vehicle for transporting hazardous liquids.

(57) A liquid level sensor for a tanker vehicle carrying toxic waste comprises a tube (4) dipping into the waste. The interior of the tube (4) is connected to control part of a pneumatic amplifier (22) having an outlet connected to an indicator. The amplifier (22) and associated parts are in a casing (10) breached only by the fluid inlet and outlet pipes to the amplifier.

EP 0 059 530 A1

- 2 -

## DESCRIPTION

This invention relates to a road-going vehicle which carries hazardous liquids, usually wastes of a corrosive and/or toxic nature.

It has been the practice to load such hazardous liquids into a road tanker under a partial vacuum, maintained by a vacuum pump drawing air from above the liquid in the tank. If the pump is left running when the tank has filled up liquid will be sucked into the pump possibly causing serious damage to the pump and ultimately spilling of the corrosive liquid. A sensor is therefore necessary to indicate that the tank is full.

In the past sight glasses have been provided as level sensors on road tankers so that an operator may visually monitor the liquid level in the tank and switch off the vacuum pump when the liquid has reached the required level. However a sight glass is liable to accidental damage resulting in the possible leakage of the hazardous liquid and consequently the use of sight glasses on road tankers which carry hazardous liquids is becoming subject to restrictions.

In the place of a sight glass a mechanical sensor comprising a float and levers communicating with an external gauge or indicator may be used on road tankers but constant contact between such sensors and corrosive liquids restricts their construction to plastics materials or titanium.

Electronic sensors, protected from the effects of corrosive liquids, are very expensive and need to be recalibrated each time the chemical nature of the liquid carried in the tanker is changed.

Both electronic and mechanical sensors may moreover malfunction or fail if they become encrusted with a deposit from any liquid with which they are in contact.

A fourth known method of estimating the contents of a road tanker is to measure the deflection of such a vehicle's springs as it is loaded. Unfortunately such deflections are not large and are dependent upon the density of the liquid being loaded, the condition of the vehicle springs, and many other variables. Hence this method does not give accurate repeatable results.

According to one aspect of the present invention there is provided a tanker vehicle comprising a tank for the hazardous liquid, a level sensor associated with the tank comprising a tube with an open lower end to be dipped in the liquid, a gas connection pipe from the interior of the tube to the control port of a pneumatic amplifier having in and out gas pipes respectively connected to a gas supply and an indicator, and a protective casing for the amplifier and its connection to the tube, having as sole connections to the exterior the inlet and outlet pipes to the pneumatic amplifier, said casing being so constructed as to resist accidental damage.

Gas pressure in the tube rises with the liquid level above the tube lower end and at a predetermined pressure the pneumatic amplifier is triggered to allow a gas connection from inlet to outlet indicator which then registers "full".

A pneumatic amplifier is a known device and typically functions as a switch, that is to say the connection from the inlet gas supply to the gas outlet is made only when a certain and predetermined gas pressure is fed onto the control port. Typically these devices are diaphragm operated. An important feature of the present invention resides in the special applicability of a pneumatic amplifier to the specialised problem of liquid level indication in a tanker vehicle.

In an embodiment a rigid element holding the upper end part of the tube is fixed around a hole' in the tank wall, the tube extending into the exterior of the tank to dip into the liquid contents. A casing extends upwardly from the plate and defines a compartment vented to the interior of the tank. The upper end of the tube is capped and the control gas pressure line extends through the cap to the pneumatic amplifier securely fixed to the casing wall and inside the compartment. The inlet and outlet connections to the gas amplifier which are typically narrow flexible pipes pass through the wall of the casing and need only involve very narrow orifices. With an armoured casing the probable worst outcome of a road accident is the severing of these pipes which is extremely unlikely to involve the leakage of hazardous liquid to the environment.

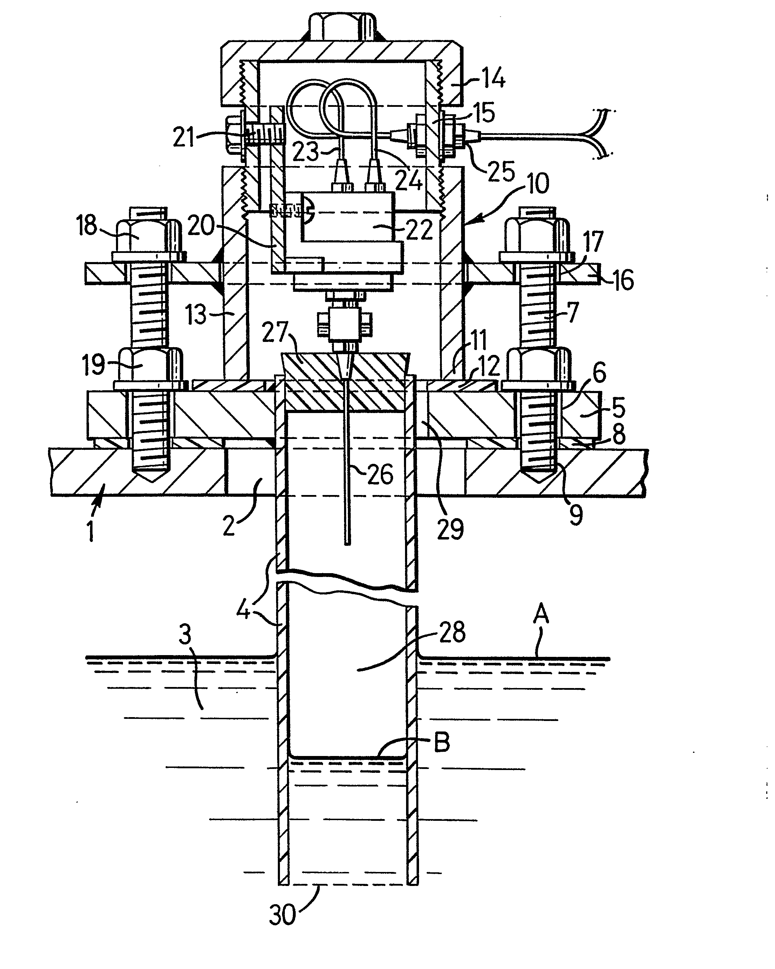

A particular embodiment of the invention will now be described by way of example and with reference to the accompanying drawing which is a sectional view through part of a tank wall with the level indicating device in accordance with the present invention.

The device is fixed to the tank of a tanker vehicle (not shown) and a portion of the upper part of the tank wall is identified by the reference numeral 1. A circular hole 2 is provided in the wall. The tank contains hazardous liquid 3 to a level A. A tube 4 formed of a material, for example PVC, which will not be corroded by the hazardous liquid depends through the hole 2 into liquid 3. An annular flange 5, of thick tough plastics, surrounds and is fixed to the upper part of the tube 4. Four holes 6, spaced from one another by $90^{\circ}$, for fixing bolts 7 are provided in the flange and engage through the intermediary of washer 8 with threaded sockets 9 in the tanker wall 1.

A thick and rigid metal casing 10 of circular cross section has the lower rim 11 thereof seating on a washer 12 resting on the upper surface of the annular fixing flange 5. The casing is in two parts, a lower part 13 and an upper part 14 interconnected by an externally threaded sleeve 15. A radially outwardly extending flange 16 surrounds the lower part 13 and has apertures 17 in register with apertures 6 of flange 5 and secured by the same bolts 7. Upper and lower clamping nuts 18 and 19 are provided on each bolt 7.

A bracket 20 is secured inside casing 10 by a bolt 21 passing through sleeve 15. The bracket 20 supports a pneumatic amplifier 22 having flexible inlet and outlet air pipes 23 and 24 respectively. Pipes 23 and 24 pass through a gland 25 lined with an elastomeric material fixed to the side of sleeve 15 opposite to the bracket securing bolt 21. Thus the inlet and outlet air lines to the pneumatic amplifier enter through a relatively narrow orifice this being the only opening in the casing. From the lower part of pneumatic amplifier 22 a control gas pipe 26 penetrates a closure cap 27 for tube 4 and thus communicates with the gas space 28 in the interior of the tube. A first outlet of the amplifier is a vent to the casing interior and a second is through outlet pipe 25 to a visual indicator (not shown) and a vent 29 communicates the interior of the casing 10 with the inside of the tank above the level A of liquid 3.

If the air pressure exerted at the control pipe 26 is less than a predetermined figure, say about 3 inches of water above ambient pressure in the tank as communicated to the casing, then the amplifier 22 operates to direct inlet air from pipe 24 through the first venting outlet to the amplifier. When the air pressure at pipe 26 rises above this predetermined figure then the amplifier, operating as a switch, is "opened" and air is caused to flow from inlet pipe 23 to outlet pipe 24 and hence to the indicator. The indicator can be so devised as to show a first colour, say black, when the amplifier is in the "closed" position and a second colour, say red, when the amplifier is in the "open" position.

In use the vehicle air-brake reservoir is connected to the "in" port 23 of the amplifier 20. At all times while the tank is being filled with liquid the air above the liquid in the tank is kept at a constant pressure, typically about 28" of mercury below atmospheric pressure. When the liquid level A rises past the open end part 30 of the tube air is trapped in the air space 28 and the pressure in space 28 increases in proportion to any increase in the vertical distance between the liquid level A and the entrance orifice 30 of the tube. The pressure transmitted through pipe 26 to the control of the pneumatic amplifier thus increases with the rise of level A. At the predetermined figure mentioned above the amplifier acts to give a visual indication that the tank is full.

Some advantages of the present invention are:-

It does not form a weak point in the tank;

It has no mechanisms which may become jammed by solid deposits, and It need not be recalibrated each time the chemical nature of the liquid in the tank is changed.

Moreover a digital signal is generated suitable for using directly as an indication or by including it in a control system to close valves or switches of pumps etc. The device operates under all conditions of tank and atmospheric pressure without disturbing the signal and forms a mechanical barrier between the tank contents and the environment and indication system. No electrical, or heating energy is required and the device can be used with a very wide range of corrosive, toxic and dangerous materials in a sealed tank. In this last category of materials can be included inflammable liquids such as fuels.

In an alternative embodiment the amplifier and its associated parts are housed within the tank, the inlet and outlet air pipes then passing through a small aperture in the tank wall.

0059530

- 1 -

CLAIMS

1. A tanker vehicle comprising a tank for the hazardous liquid, a level indicator associated with the tank comprising a tube with an open lower end to be dipped in the liquid, a gas connection pipe from the interior of the tube to the control port of a pneumatic amplifier having in and out gas pipes respectively connected to a gas supply and an indicator, and a protective casing for the amplifier and its connection to the tube, having as sole connections to the exterior the inlet and outlet pipes to the pneumatic amplifier, said casing being so constructed as to resist accidental damage.

2. A vehicle as claimed in Claim 1 wherein a rigid element holding the upper part of the tube is fixed around a hole in the tank, wherein the tube, with a capped upper end, extends into the tank from the hole wherein a control gas pressure pipe extends through the upper end of the tube to the amplifier and wherein a protective casing covering the tube upper end the hole and the amplifier is fixed to the tank, the casing being breached solely to receive the gas inlet pipe from the supply and the gas outlet pipe

to the indicator.

1/1

0059530

# EUROPEAN SEARCH REPORT

## DOCUMENTS CONSIDERED TO BE RELEVANT

| Category | Citation of document with indication, where appropriate, of relevant passages | Relevant to claim |
|---|---|---|
| A | GB - A - 1 078 270 (KLEMMETSEN)  * Claim 1; fig. *  ---- | 1 |

**CLASSIFICATION OF THE APPLICATION (Int. Cl. 3)**

G 01 F 23/16

**TECHNICAL FIELDS SEARCHED (Int.Cl. 3)**

G 01 F 23/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document. but published on. or after the filing date
D: document cited in the application
L: document cited for other reasons

&: member of the same patent family, corresponding document

| | |
|---|---|
| X | The present search report has been drawn up for all claims |

| Place of search | Date of completion of the search· | Examiner |
|---|---|---|
| VIENNA | 06-05-1982 | STÖGER |

EPO Form 1503.1  06.78